# EUROPEAN PATENT APPLICATION

(11) **EP 2 433 691 A1**
(43) Date of publication of application: **28.03.2012**
(21) Application number: 09844857.4
(22) Date of filing: 18.05.2009
(51) Int. Cl.: B01D 19/00, B05C 11/10, B05D 3/00

(54) **DEAERATOR**

(71) Applicant: Voith Patent GmbH, 89522 Heidenheim (DE)
(72) Inventor: SASA, Tadashi, Tokyo 104-0028 (JP); HIRANO, Akio, Tokyo 104-0028 (JP); KOHNO, Hiroyuki, Tokyo 104-0028 (JP)
(74) Representative: Gleiss, Alf-Olav
(86) International application number: PCT/JP2009/002184
(87) International publication number: WO 2010/134122

(57) **Abstract**

A deaerator is provided that does not use a rotary mechanism, yet enables the size of the chamber into which coating liquid is supplied to be decreased. The deaerator for removing air bubbles entrained in a coating liquid Q comprises: an upper thin-film forming plate 30 having a tapered surface 30b with an apex 30a on an upper side, and letting the coating liquid Q flow along the tapered surface 30b to an outer part; and a lower thin-film forming plate 40 arranged at a distance below the upper thin-film forming plate 30, the lower thin-film forming plate 30 being formed in the shape of a downwardly-recessed funnel, receiving the coating liquid Q falling from the upper thin-film forming plate 30, and letting the coating liquid Q flow along a downwardly-sloping inclined surface 40a.

## Description

### [Technical Field of the Invention]

The present invention relates to a deaerator for removing air bubbles generated in coating material being supplied to a coater or the like.

### [Background of the Invention]

Paper produced at a paper mill is not used as-is, but often further processed as base paper, leading to a product of processed paper fitting for required purposes. There are various processed papers, one among them being coated processed paper. Coated processed paper is made of paper onto which coating liquid is applied. Devices for producing such paper include curtain coaters.

When coating liquid is supplied to a liquid supply head of such a curtain coater, a deaerator is used to remove air bubbles entrained in the coating liquid. In recent years, thanks to the advancement of coating technologies, it has become possible to form high-quality coating films from small amounts of coating liquid. Therefore, a process of removing the air bubbles is required for thinner films.

Most conventional deaerators are provided with centrifugal separation mechanisms. Specifically, a conventional deaerator has a rotary plate that rotates in a chamber, splashing coating liquid from the rotary plate onto a sidewall of the chamber so that a pressing force exerted when the coating liquid hits the sidewall removes the air bubbles in the coating liquid (see, for example, Patent Document 1).

A deaerator without centrifugal separation structure is for example provided with a sloping, helical thin-film forming plate in a chamber and lets coating liquid flow along the thin-film forming plate to remove air bubbles in the coating liquid over a long flow course (see, for example, Patent Document 2).

### [Background Art]

### [Patent Documents]

Patent Document 1: WO 2008/028722
Patent Document 2: JP Patent Appl. Publ. No. 10-328503

### [Summary of the Invention]

### [Problems to be Solved by the Invention]

However, a deaerator with centrifugal separation mechanism requires power to rotate the rotary plate. Therefore, installation of a drive unit, e.g., a motor, increases costs. A rotation mechanism for the rotation of the rotary plate is also required. Therefore, periodic replacement of consumables (e.g., bearings) is required, resulting in problems such as increase in costs and troublesome maintenance.

On the other hand, in the deaerator with the helical thin-film forming plate the removal of the air bubbles requires a long flow course, resulting in the problem that the size of the chamber of the deaerator has to be increased.

The present invention is made in view of the above-described problems, and it is an object of the present invention to provide a deaerator that does not use a rotary mechanism, yet enables the size of the chamber into which coating liquid is supplied to be decreased.

### [Means for Solving the Problems]

In order to solve the above-described problems, a deaerator of the present invention for removing air bubbles entrained in coating liquid comprises an upper thin-film forming plate having a tapered surface with an apex on an upper side, and letting the coating liquid flow along the tapered surface to an outer part; and a lower thin-film forming plate arranged at a distance below the upper thin-film forming plate, the lower thin-film forming plate being formed in the shape of a downwardly-recessed funnel, receiving at an outer part the coating liquid falling from the upper thin-film forming plate, and letting the coating liquid flow along a downwardly-sloping inclined surface.

Further, thin-film forming sections, each being comprised of a pair of the upper thin-film forming plate and the lower thin-film forming plate, can be arranged in a vertically multilayered structure.

Further, the upper thin-film forming plate and the lower thin-film forming plate may be housed within a vacuum chamber so as to let the coating liquid flow down in a vacuum state.

In this case, a pressure within the vacuum chamber is preferably in the range of 50 torr to 5 torr.

Furthermore, inclination angles of the tapered surface of the upper thin-film forming plate and the inclined surface of the lower thin-film forming plate can be in the range of 15 degrees to 45 degrees.

### [Advantageous Effects of the Invention]

The deaerator of the present invention comprises the upper thin-film forming plate having the tapered surface with the apex on the upper side, and letting the coating liquid flow along the tapered surface to the outer part; and the lower thin-film forming plate arranged at a distance below the upper thin-film forming plate, the lower thin-film forming plate being formed in the shape of a downwardly-recessed funnel, receiving at the outer part the coating liquid falling from the upper thin-film forming plate, and letting the coating liquid flow along the downwardly-sloping inclined surface. Therefore, the upper thin-film forming plate and the lower thin-film forming plate ensure a long flow course for the coating liquid and allow the coating liquid to fall and come into contact with the lower thin-film forming plate so that a pressure is applied to the coating liquid, thus removing the air bubbles. Therefore, it becomes unnecessary to use a centrifugal separation mechanism or the like, and an increase in costs and troublesome maintenance can be avoided.

Further, when the two above-described removal processes are incorporated into a single deaerator, the flow course can be made shorter than that in a device for removing the air bubbles only by letting the coating liquid flow along the slope and an unnecessarily large deaerator chamber is avoided. Thus, the external dimensions of the deaerator can be made smaller.

### [Brief Description of the Drawings]

Fig. 1 is a cross-sectional side view of a deaerator of the present invention.
Fig. 2 is a cross-sectional view along line A-A in Fig. 1.
Fig. 3 is a cross-sectional side view of a deaerator according to another embodiment of the present invention.

### [Description of the Preferred Embodiments]

Hereinafter, a deaerator according to an embodiment of the present invention is described in detail with reference to the drawings. In the description, parts which are identical to the conventional structure are designated the same reference numerals.

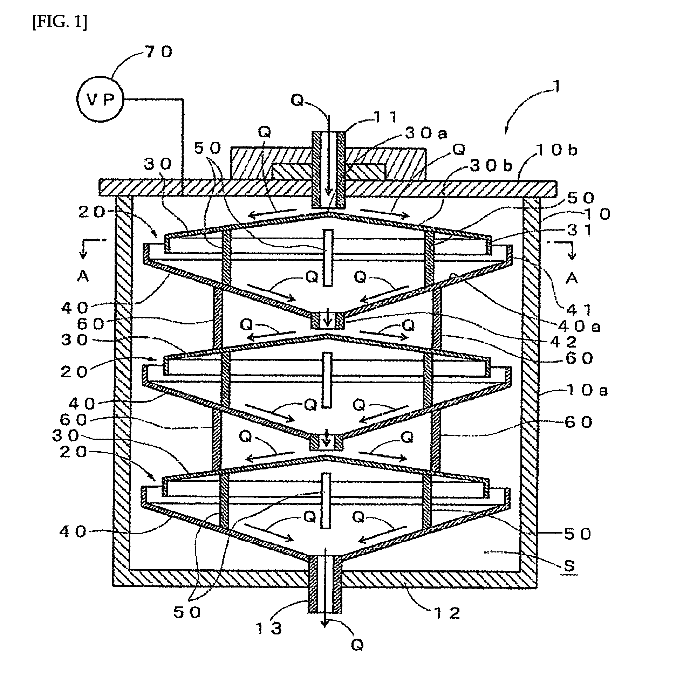

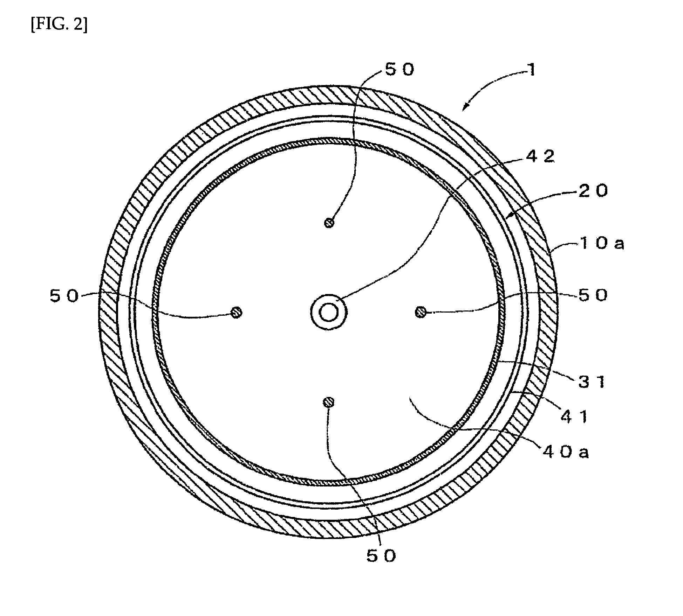

Fig. 1 is a cross-sectional side view showing the overview of the deaerator 1. Fig. 2 is a cross-sectional view along line A-A in Fig. 1.

The deaerator 1 comprises a chamber 10, into which coating liquid Q is supplied, and thin-film forming sections 20 arranged inside the chamber 10. The deaerator 1 illustrated in Fig. 1 is an example of a deaeraror which is provided with a vertically layered structure of three thin-film forming sections 20.

As shown in Fig. 1, the chamber 10 is comprised of a bottomed cylindrical lower chamber portion 10a having an opening on an upper side, and a disc-shaped lid portion 10b covering the upper opening. When combined, the lower chamber portion 10a and the lid portion 10b function as a vacuum chamber that can maintain the vacuum state inside the chamber 10.

A central part of the disc-shaped lid portion 10b is provided with a vertically movable supply pipe 11. The supply pipe 11 functions as a supply port for supplying coating liquid Q into the chamber 10.

A central part of a base 12 of the lower chamber portion 10a is provided with a discharge pipe 13. The discharge pipe 13 functions as a discharge port for discharging deaerated coating liquid Q.

Meanwhile, as shown in Fig. 1, each thin-film forming section 20 is comprised of a pair of an upper thin-film forming plate 30 and a lower thin-film forming plate 40. In the present embodiment, the three thin-film forming sections 20 are arranged in a vertically layered structure. However, the configuration is not limited to a three-layered structure, but rather may also be a two-layered structure or four- or more-layered structure. A single-layered structure is also possible, as long as its deaeration function suffices.

Each upper thin-film forming plate 30 has an apex 30a on an upper side and a conical surface 30b (tapered surface) having a lateral side that is obliquely inclined downward toward the outer circumference. Each apex 30a is disposed vertically below the above-mentioned supply pipe 11 so that the coating liquid Q supplied from the supply pipe 11 flows from the apex 30a uniformly in all directions toward the outer circumference. By vertically shifting the location of the supply pipe 11, a gap between the supply pipe 11 and the upper thin-film forming plate 30 can be changed and adjusted so that the coating liquid Q flows uniformly in all directions toward the outer circumference.

Further, a lower edge part located at the outer circumference of the conical surface 30b is provided with a guide wall 31 extending downward toward the lower thin-film forming plates 40 and continuing in the circumferential direction. The guide wall 31 functions to guide the coating liquid Q in such a manner that the coating liquid Q flowing obliquely downward along the conical surface 30b consistently falls (drops) on the lower thin-film forming plate 40.

As shown in Fig. 1, each lower thin-film forming plate 40 is arranged at a distance below an upper thin-film forming plate 30. Each lower thin-film forming plate 40 is formed in the shape of a downwardly recessed funnel. The diameter of the lower thin-film forming plate 40 as viewed from the top is larger than that of the upper thin-film forming plate 30. Further, an upper edge part located at the outer circumference of the lower thin-film forming plate 40 is provided with a vertical wall 41 that prevents the coating liquid Q from spilling out of the funnel-shaped plate. Thus, the coating liquid Q falling downward from the guide wall 31 is received at the outer circumferential part of the lower thin-film forming plate 40, said outer circumferential part being located further out in radial direction than the guide wall 31, and flows inward in the funnel-shaped plate.

The lower thin-film forming plate 40 has an inclined surface 40a sloping downward toward the center of the funnel shapes along which the coating liquid Q flows obliquely downward. A discharge pipe 42 is disposed at the lowermost part of the funnel-shaped plate. The coating liquid Q flows out of the lower thin-film forming plate 40 through the discharge pipe 42.

The upper thin-film forming plate 30 is connected to the lower thin-film forming plate 40 with four connecting pipes 50. As shown in Fig. 2, the connecting pipes 50 are disposed at intervals of about 90 degrees in the circumferential direction. The connection lengths of the connecting pipes 50 are freely adjustable by a fastening structure (illustration omitted), e.g., a screw. This fastening structure allows the upper thin-film forming plate 30 to be freely separated from/combined with the lower thin-film forming plate 40.

The conical surface 30b and the inclined surface 40a must have inclination angles that allow a sufficient flow of the coating liquid Q as regards flow rate. In addition, the film thickness of the coating liquid Q must be made so thin that the air bubbles are readily removed. Specifically, an equation is defined as follows: Flow rate = areas of the conical surface 30b and the inclined surface 40a × film thickness of the coating liquid Q flowing on the conical surface 30b and the inclined surface 40a; and the film thickness of the coating liquid Q is set in the range of 0.1 mm to 10 mm. Therefore, the inclination angles can be set in the range of 15 degrees to 45 degrees. In addition, when the upper thin-film forming plate 30 and the lower thin-film forming plate 40 are made replaceable by using a fastening structure, an upper thin-film forming plate 30 and a lower thin-film forming plate 40 with different inclination angles can be selected and used freely so that a thin-film forming sections 20 with optimal inclination angles can be configured depending on flow rate, viscosity, etc. of the coating liquid Q.

Further, the thin-film forming sections 20 comprised of the pairs of the upper thin-film forming plates and the lower thin-film forming plates 40 can be connected vertically to each other with connecting pipes 60. As with the connecting pipes 50, the connection lengths of the connecting pipes 60 are also freely adjustable by using a fastening structure (illustration omitted), e.g., a screw. Further, this fastening structure allows the thin-film forming sections 20 to be freely separated from/combined with each other so that an optimal number of layers of the thin-film forming sections 20 can be configured.

Meanwhile, as shown in Fig. 1, the chamber 10 is connected to a vacuum pump 70 via a pipe. Thus, the air within the chamber 10 is sucked out by the vacuum pump 70 so that an internal space S of the chamber 10 is brought into a vacuum state. Herein, the vacuum state indicates an internal pressure in the chamber in the range of 50 torr to 5 torr. The internal pressure can be set freely within the above pressure range on the basis of a signal from a control unit (not shown).

Next, the operation of the deaerator 1 according to an embodiment of the present invention is described with reference to Fig. 1.

After the inside of the chamber 10 has been brought into a vacuum state with the vacuum pump 70, the coating liquid Q is supplied to the deaerator 1. The coating liquid Q supplied from the supply pipe 11 is first supplied to the thin-film forming section 20 located inside the chamber 10 in an uppermost part of the chamber 10. More specifically, the coating liquid Q flows to the location of the apex 30a of the upper thin-film forming plate 30, spreads uniformly in all directions toward the outer circumference, and flows down outward and obliquely downward along the conical surface 30b. At this time, the film thickness of the coating liquid Q becomes thinner in proportion to the flow length. When the film thickness of the coating liquid Q becomes thinner, the air bubbles present in the coating liquid Q can be exposed more easily on the outer surface of the coating liquid Q so that the air bubbles are removed from the coating liquid Q. Thus, a first deaeration process is achieved.

The coating liquid Q flowing down to the lower edge part of the conical surface 30b is guided by the guide wall 31 to fall on the lower thin-film forming plate 40 by its own weight. At this time, the coating liquid Q comes into contact with the inclined surface 40a of the lower thin-film forming plate 40 so that the contacting pressure removes the internal air bubbles from the coating liquid Q. Thus, a second deaeration process is achieved.

Further, the coating liquid Q flows down inward and obliquely downward along the inclined surface 40a of the lower thin-film forming plate 40. In this way, as with the above-described first deaeration process, the air bubbles are further removed from the coating liquid Q. Thus, a third deaeration process is achieved.

In the three-layered structure, the above-described first to third deaeration processes are repeated three times so that the air bubbles in the coating liquid Q are further removed. The deaerated coating liquid Q is discharged from the deaerator 1 through the discharge pipe 13 and transferred to a liquid supply head, etc. of a curtain coater (not shown).

Further, when the removal of the air bubbles is not sufficient due to the type or viscosity of the coating liquid Q, the upper thin-film forming plates 30 and/or the lower thin-film forming plates 40 are replaced with plates with different inclination angles to perform deaeration. Further, the number of the thin-film forming sections 20 in the multilayered structure is selected as necessary to achieve the above-described first to third deaeration effects multiple times.

The deaerator according to this embodiment of the present invention comprises:
the upper thin-film forming plate 30 having the conical surface 30b with the apex 30a on the upper side and letting the coating liquid Q flow along the conical surface 30b; and
the lower thin-film forming plate 40 arranged at a distance below the upper thin-film forming plate 30, being formed in the shape of a downwardly-recessed funnel, receiving at the outer part the coating liquid Q falling from the upper thin-film forming plate 30, and letting the coating liquid Q flow along the downwardly-sloping inclined surface 40a.
Thus, the upper thin-film forming plate 30 and the lower thin-film forming plate 40 ensure a long flow course for the coating liquid Q and allow the coating liquid Q to fall and come into contact with the lower thin-film forming plate 40 so that a pressure is applied to the coating liquid Q, thus removing the air bubbles. Therefore, it becomes unnecessary to use a centrifugal separation mechanism or the like, and an increase in costs and troublesome maintenance can be avoided. Further, when the two above-described removal processes are incorporated into a single deaerator, the flow course can be made shorter than that in a device for removing the air bubbles only by letting the coating liquid Q flow along the slope and an unnecessarily large deaerator chamber 10 is avoided. Thus, the external dimensions of the deaerator 1 can be made smaller.

Further, by arranging the thin-film forming sections 20 comprised of pairs of the upper thin-film forming plates 30 and the lower thin-film forming plates 40 in the vertically multilayered structure, a greater deaeration effect can be achieved. Particularly, selecting the number of layers for the multilayered structure depending on the type or viscosity of the coating liquid Q allows a more efficient removal of the air bubbles from the coating liquid Q.

Further, since the upper thin-film forming plates 30 and the lower thin-film forming plates 40 are housed within the vacuum chamber 10 and the coating liquid Q flows in the vacuum state (pressure range of 50 torr to 5 torr), the external pressure applied to the air bubbles in the coating liquid Q is small, so that the rupture (burst) of the air bubbles is facilitated. Therefore, the air bubbles in the coating liquid Q can be removed more efficiently.

Further, since the conical surfaces 30b of the upper thin-film forming plates 30 and the inclined surfaces 40a of the lower thin-film forming plates 40 have inclination angles in the range of 15 degrees to 45 degrees and can be freely replaced, the inclination angles can be freely selected depending on the type, viscosity, etc. of the coating liquid Q, so that the air bubbles can be removed more efficiently.

Above, a deaerator according to an embodiment of the present invention has been described. However, the present invention is not limited to the above-described embodiment. Rather, various variations and modifications may be made on the basis of the technical idea of the present invention.

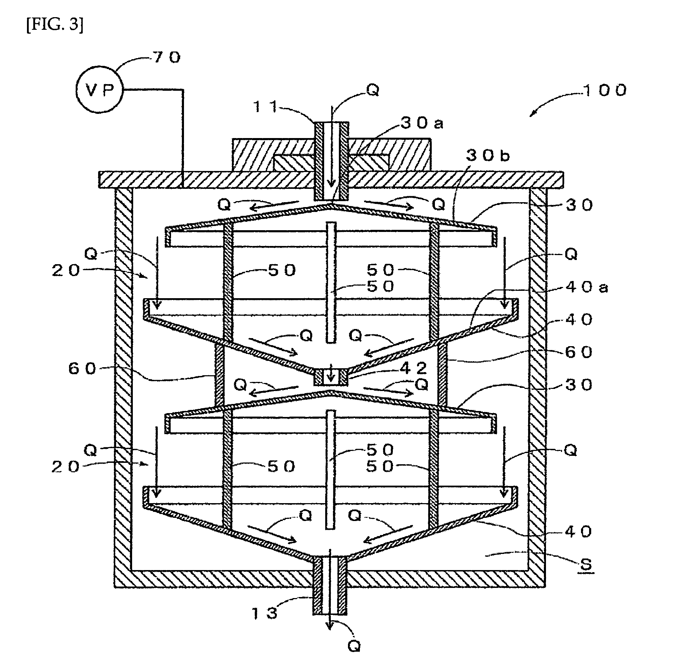

For example, in the present embodiment, a layered structure of three thin-film forming sections 20 is provided. However, the gaps between the upper thin-film forming plates 30 and the lower thin-film forming plates 40 may be increased as shown in Fig. 3 so that a deaerator 100 with a layered structure of two thin-film forming sections 20 can be configured. In other words, since the deaerator 1 described herein performs a combination of the first and third deaeration processes and the second deaeration process, shorter flow courses in the first and the third processes can be compensated for by the deaeration effect in the second process being increased. In the second process, the pressure of the coating liquid Q coming into contact with the inclined surface 40a is utilized to achieve the deaeration effect. Therefore, a greater effect can be achieved with a higher pressure. Specifically, a longer falling distance increases the effect in the second process, so that the number of the thin-film forming sections 20 in the multilayered structure can be reduced.

Although in the present embodiment, the upper thin-film forming plates 30 comprise conical surfaces 30b, these are not limited to a conical shape. In other words, the upper thin-film forming plates may have a pyramidal shape, e.g., a square pyramidal shape, and the lateral sides may be pyramidal surfaces (conical surfaces and pyramidal surfaces are collectively called tapered surfaces). This also allows the removal of the air bubbles in the coating liquid Q by letting the coating liquid Q flow down along the tapered surface.

Likewise, the lower thin-film forming plates 40, which have the shape of a funnel, are not limited to a conical shape. Rather, the inclined surfaces 40a may have the same shapes as the tapered surfaces.

### [Description of Reference Numerals]

- 1, 100: Deaerator
- 10: Chamber
- 10a: Lower chamber portion
- 10b: Lid portion
- 11: Supply pipe
- 12: Base
- 13: Discharge pipe
- 20: Thin-film forming section
- 30: Upper thin-film forming plate
- 30a: Apex
- 30b: Conical surface (tapered surface)
- 31: Guide wall
- 40: Lower thin-film forming plate
- 40a: Inclined surface
- 41: Vertical wall
- 42: Discharge pipe
- 50: Connecting pipe
- 60: Connecting pipe
- Q: Coating liquid

## Claims

1. A deaerator for removing air bubbles entrained in a coating liquid, comprising:
an upper thin-film forming plate having a tapered surface with an apex on an upper side, and letting the coating liquid flow along the tapered surface to an outer part; and
a lower thin-film forming plate arranged at a distance below the upper thin-film forming plate, the lower thin-film forming plate being formed in the shape of a downwardly-recessed funnel, receiving at an outer part the coating liquid falling from the upper thin-film forming plate, and letting the coating liquid flow along a downwardly-sloping inclined surface.

2. The deaerator according to claim 1, wherein thin-film forming sections, each being comprised of a pair of the upper thin-film forming plate and the lower thin-film forming plate, are arranged in a vertically multilayered structure.

3. The deaerator according to claim 1 or 2, wherein the upper thin-film forming plate and the lower thin-film forming plate are housed within a vacuum chamber so as to let the coating liquid flow down in a vacuum state.

4. The deaerator according to claim 3, wherein a pressure within the vacuum chamber is in the range of 50 torr to 5 torr.

5. The deaerator according to any one of claims 1 to 4, wherein inclination angles of the tapered surface of the upper thin-film forming plate and the inclined surface of the lower thin-film forming plate are in the range of 15 degrees to 45 degrees.
